# EUROPEAN PATENT SPECIFICATION

(11) **EP 3 681 231 B1**
(45) Date of publication and mention of the grant of the patent: **01.04.2026**
(21) Application number: 17924507.1
(22) Date of filing: 07.09.2017
(51) Int. Cl.: H04L 1/08, H04W 72/02, H04W 74/08

(54) **USER TERMINAL AND RADIO COMMUNICATION METHOD**
BENUTZERENDGERÄT UND FUNKKOMMUNIKATIONSVERFAHREN
TERMINAL UTILISATEUR ET PROCÉDÉ DE COMMUNICATION RADIO

(43) Date of publication of application: 15.07.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/032322
(87) International publication number: WO 2019/049279

(56) References cited:
- HUAWEI ET AL: "Grant-free transmission for UL URLLC", vol. RAN WG1, no. Hangzhou, China; 20170515 - 20170519, 14 May 2017 (2017-05-14), XP051272149, Retrieved from the Internet <URL:http://www.3gpp.org/ftp/Meetings_3GPP_SYNC/RAN1/Docs/> [retrieved on 20170514]
- NTT DOCOMO ET AL: "Overall solutions for UL grant free transmission", vol. RAN WG1, no. Qingdao, P.R. China; 20170627 - 20170630, 26 June 2017 (2017-06-26), XP051300311, Retrieved from the Internet <URL:http://www.3gpp.org/ftp/Meetings_3GPP_SYNC/RAN1/Docs/> [retrieved on 20170626]
- NTT DOCOMO ET AL: "Offline discussions on some topics for AI6.1.3.3.3", vol. RAN WG1, no. Prague, Czechia; 20170821 - 20170825, 26 August 2017 (2017-08-26), XP051328673, Retrieved from the Internet <URL:http://www.3gpp.org/ftp/tsg_ran/WG1_RL1/TSGR1_90/Docs/> [retrieved on 20170826]
- SONY: "Discussion on the pre-emption and retransmission of UL transmission without grant", vol. RAN WG1, no. Prague, Czech Republic; 20170821 - 20170825, 20 August 2017 (2017-08-20), XP051315783, Retrieved from the Internet <URL:http://www.3gpp.org/ftp/Meetings_3GPP_SYNC/RAN1/Docs/> [retrieved on 20170820]
- INTEL CORPORATION: "Semi-persistent scheduling for feNB-IoT", vol. RAN WG1, no. Prague, Czech Republic; 20170821 - 20170825, 20 August 2017 (2017-08-20), XP051315319, Retrieved from the Internet <URL:http://www.3gpp.org/ftp/Meetings_3GPP_SYNC/RAN1/Docs/> [retrieved on 20170820]
- "UL data transmission without UL grant", 3GPP TSG RAN WG1 MEETING #90 R1-1713952, 25 August 2017 (2017-08-25), XP051316744
- "Offline discussions on some topics for AI6. 1. 3. 3. 3", 3GPP TSG RAN WG1 MEETING #90 R1-1715193, 25 August 2017 (2017-08-25), pages 1 - 8, XP051328673
- SONY: "Discussion on the pre-emption and retransmission of UL transmission without grant", 3GPP TSG RAN WG1 MEETING #90, XP051315783
- "UL data transmission without UL grant", 3GPP TSG RAN WG1 MEETING NR AD-HOC#3 R1-1716664, 21 September 2017 (2017-09-21), XP051353791
- "UL data transmission procedures", 3GPP TSG RAN WG1 MEETING 90BIS R1-1718219, 13 October 2017 (2017-10-13), XP051352927

## Description

### Technical Field

The present invention relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for a larger capacity and higher sophistication than those of LTE (LTE Rel. 8 and 9), LTE-Advanced (LTE-A or LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) have been also studied.

Legacy LTE systems (e.g., LTE Rel. 8 to 13) perform communication on Downlink (DL) and/or Uplink (UL) by using a subframe (also referred to as a TTI: Transmission Time Interval) of 1 ms. This subframe is a transmission time unit of 1 channel-coded data packet, and is a processing unit of scheduling, link adaptation or retransmission control (HARQ: Hybrid Automatic Repeat reQuest).

Furthermore, a radio base station (e.g., eNode B (eNB)) controls allocation (scheduling) of data for a user terminal (UE: User Equipment), and notifies the UE of a scheduling indication of the data by using Downlink Control Information (DCI). When, for example, receiving DCI (also referred to as a UL grant) for indicating UL transmission, the UE that complies with legacy LTE (e.g., LTE Rel. 8 to 13) transmits UL data in a subframe that comes a given duration after (e.g., after 4 ms).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

HUAWEI ET AL: "Grant-free transmission for UL URLLC", 3GPP DRAFT; R1-1706919, 3RD GENERATION PARTNERSHIP PROJECT (3GPP), vol. RAN WG1, no. Hangzhou, China; 20170515 - 20170519 discusses grant-free repetitions using stopping conditions.

NTT DOCOMO ET AL: "Overall solutions for UL grant free transmission", 3GPP DRAFT; R1 -1711111,3RD GENERATION PARTNERSHIP PROJECT (3GPP), vol. RAN WG1, no. Qingdao, P.R. China; 20170627- 20170630 discusses a semi-static resource allocations with shorter periodicity with UL transmission skipping and without implicit resource release.

INTEL CORPORATION: "Semi-persistent scheduling for feNB-loT",3GPP DRAFT; R1-1712503, 3RD GENERATION PARTNERSHIP PROJECT (3GPP), vol. RAN WG1, no. Prague, Czech Republic; 20170821 - 20170825 discusses a Semi-persistent scheduling procedure for feNB-IoT.

### Summary of Invention

### Technical Problem

It is assumed that a future radio communication system (e.g., NR) controls scheduling of data by using a configuration different from those of legacy LTE systems. For example, it has been studied to reduce communication latency to provide communication service (e.g., Ultra Reliable and Low Latency Communications (URLLC)) that is requested to realize low latency and high reliability.

More specifically, to shorten a delay time until transmission of UL data is started, it has been studied to permit contention of UL transmission of a plurality of UEs and perform communication. For example, transmission (also referred to as UL grant-free transmission, UL grant-less transmission or contention-based UL transmission) of UL data from a UE without a UL grant from a radio base station has been studied.

Furthermore, it has been also studied to repeatedly transmit (repeated transmission) the same uplink data by UL grant-free. It is desired to improve performance and reliability of radio communication by appropriately performing this repeated transmission.

It is therefore one of objects of the present invention to provide a user terminal and a radio communication method that can appropriately perform UL grant-free repeated transmission.

### Solution to Problem

The mentioned problems are solved by the subject-matter of the independent claims. Further preferred embodiments are defined in the dependent claims. Subject matter discussed throughout the following but not falling under the scope of the claims does not form part of the invention.

A user terminal according to one aspect includes: a transmission section that transmits UL data without a UL transmission indication from a radio base station; and a control section that repeatedly transmits the UL data based on a number of times of repeated transmission, and the control section controls whether or not to count the number of times of repeated transmission based on a radio resource type allocated to the repeated transmission.

### Advantageous Effects of Invention

According to the present invention, it is possible to appropriately perform UL grant-free repeated transmission, and improve performance and reliability of radio communication.

### Brief Description of Drawings

Fig. 1A is a diagram for explaining UL grant-based transmission, and Fig. 1B is a diagram of explaining UL grant-free transmission.
Fig. 2 is a diagram illustrating one example of resources used for UL grant-free transmission.
Fig. 3 is a diagram illustrating one example of a UL grant-free transmission flow.
Fig. 4 is a diagram for explaining UL grant-free repeated transmission.
Fig. 5 is a diagram for explaining a <case 1> of UL grant-free repeated transmission.
Fig. 6 is a diagram for explaining a <case 2> of UL grant-free repeated transmission.
Fig. 7 is a diagram for explaining a case where there is a mix of the <case 1> and the <case 2> during UL grant-free repeated transmission.
Fig. 8 is a diagram illustrating one example of a schematic configuration of a radio communication system according to one embodiment of the present invention.
Fig. 9 is a diagram illustrating one example of an overall configuration of a radio base station according to the one embodiment of the present invention.
Fig. 10 is a diagram illustrating one example of a function configuration of the radio base station according to the one embodiment of the present invention.
Fig. 11 is a diagram illustrating one example of an overall configuration of a user terminal according to the one embodiment of the present invention.
Fig. 12 is a diagram illustrating one example of a function configuration of the user terminal according to the one embodiment of the present invention.
Fig. 13 is a diagram illustrating one example of hardware configurations of the radio base station and the user terminal according to the one embodiment of the present invention.

### Description of Embodiments

It has been studied for future radio communication systems (e.g., LTE Rel. 14, 15 and subsequent releases, 5G and NR that will be also referred to as NR below) to apply UL grant-free transmission for transmitting UL data without a UL grant to realize low latency communication since UL grant-based transmission for transmitting UL data based on the UL grant is not sufficient.

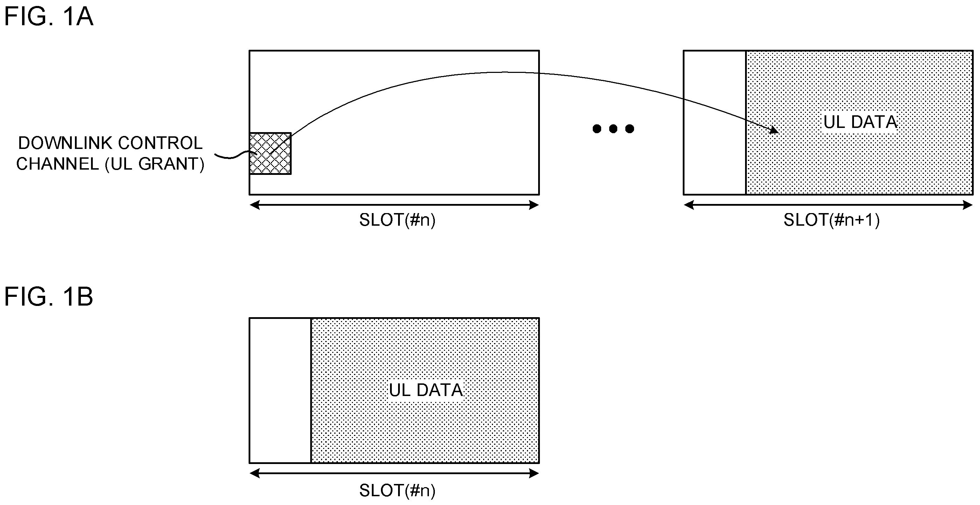

Hereinafter, UL grant-based transmission and UL grant-free transmission will be described. Fig. 1A is a diagram for explaining UL grant-based transmission, and Fig. 1B is a diagram for explaining UL grant-free transmission.

According to UL grant-based transmission, as illustrated in Fig. 1A, a radio base station (that may be referred to as, for example, a Base Station (BS), a Transmission/Reception Point (TRP), an eNode B (eNB) and a gNB) transmits a downlink control channel (UL grant) for indicating allocation of UL data (PUSCH: Physical Uplink Shared Channel), and a UE transmits UL data according to the UL grant.

On the other hand, according to UL grant-free transmission, as illustrated in Fig. 1B, the UE transmits UL data without receiving a UL grant for scheduling data.

By the way, it has been studied for NR to support at least a semi-static configuration/reconfiguration of a resource domain to which UL data to be transmitted by UL grant-free is allocated. It has been studied that a resource configuration includes at least physical resources in time and/or frequency domains.

For example, it is has been studied that resources used for UL grant-free transmission are configured by a higher layer signaling such as UL Semi Persistent Scheduling (SPS) used by legacy LTE (e.g., LTE Rel. 8 to 13). Consequently, UL grant-free transmission can be also considered as a function that is realized when the resource configuration of UL SPS is under specific conditions.

For example, a case where a resource periodicity configured by a higher layer signaling is relatively long (e.g., 10 ms) may be referred to as UL SPS, and a case where a resource periodicity configured by the same higher layer signaling is relatively short (e.g., 1 ms or 0.5 ms) may be referred to as UL grant-free transmission. Furthermore, according to UL grant-free transmission, the resource periodicity may be relatively short, and, in addition, the UE can decide and determine whether or not to perform UL transmission in the configured resources according to whether or not there is transmission data accumulated in a buffer of the UE.

That is, UL grant-free transmission may refer to a configuration to permit UL transmission skipping (UL skipping) when the configured resource periodicity is relatively short and there is not UL data. UL grant-free transmission may be referred to as UL transmission without UL grant. In addition, both may be referred to as UL SPS or UL grant-free transmission irrespectively of a resource periodicity.

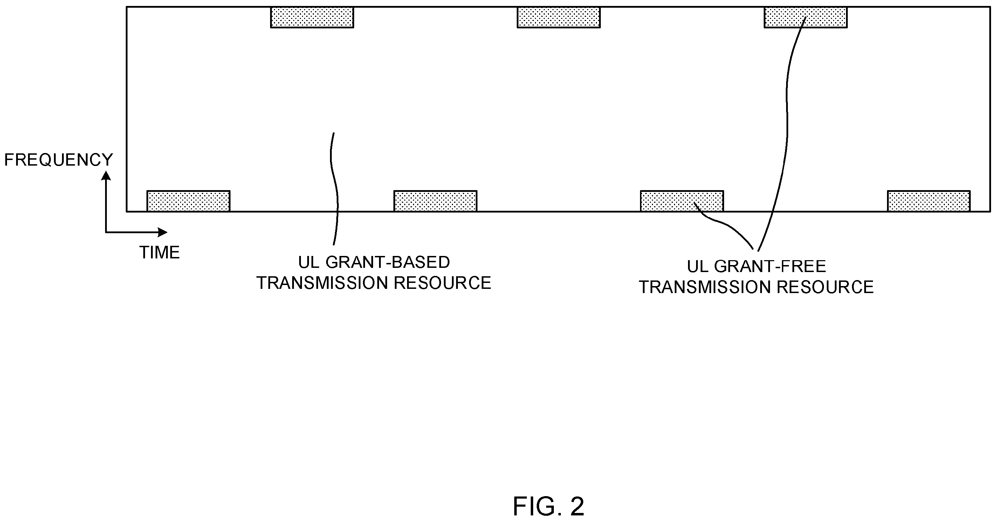

Fig. 2 is a diagram illustrating one example of resources used for UL grant-free transmission. As illustrated in Fig. 2, frequency resources used for UL grant-free transmission may be applied inter-TTI frequency hopping, intra-TTI frequency hopping, inter-slot frequency hopping or intra-slot frequency hopping. Furthermore, time resources used for UL grant-free transmission may be temporarily contiguously configured or may be temporarily non-contiguously (discontinuously) configured. In addition, resources other than the resources used for UL grant-free transmission may be used for UL grant-based transmission.

After a network (e.g., radio base station) semi-statically configures resources to the UE by using RRC, the UE may perform UL grant-free transmission. Furthermore, the network may apply activation or deactivation and/or an L1 signaling for a parameter change to UL grant-free transmission.

That is, regarding the UL grant-free transmission of a carrier configured based on a higher layer signaling such as an RRC signaling, the UE may receive information as to whether or not UL grant-free transmission can be performed (activated/deactivated), and/or information for changing resources/a transmission scheme (a modulation code rate, the number of MIMO layers and RS parameters)/transmission power via, for example, a downlink physical control channel (e.g., PDCCH), a downlink physical data channel (e.g., PDSCH) or an MAC CE, and change control of the UL grant-free transmission in response to the information.

This change may be valid during a given duration (e.g., 80 ms), or may not be changed again as long as a change indication is not received next by the higher layer signaling such as the RRC signaling or another L1 signaling.

Furthermore, repeated transmission for repeatedly transmitting identical UL data has been studied for UL grant-free transmission. According to the repeated transmission of the UL data, the UE is assumed to repeatedly transmit the UL data a given number of times (e.g., K) in a Transport Block (TB) unit.

The UE may continue repeated transmission of the TB until one of stop conditions is satisfied. One of the stop conditions may include that normal reception of the TB at a reception base station is notified to a terminal by a physical layer signaling (e.g., UL grant). Furthermore, one of the stop conditions may include that the number of times of repetition of the identical TB reaches the above given number.

It is desired to improve performance and reliability of radio communication by appropriately performing this repeated transmission. On the other hand, performing repeated transmission is to allocate a great amount of radio resources (frequency and/or time resources). Hence, when another data transmission or a measurement gap is configured, there is a high likelihood that radio resources used for the another data transmission or the measurement gap, and radio resources allocated to repeated transmission contend (transmission of another signal and/or a channel interrupts the repeated transmission).

Furthermore, in a case of the above contention, it is assumed that repeated transmission (one or more times of UL grant-free transmission) associated with the contention is skipped (i.e., the transmission is not performed). However, how to perform control associated with the above given number K is not determined.

Hence, the inventors of this application have focused on some causes (reasons) in a case where repeated transmission is blocked, conceived controlling counting of repeated transmission in association with this cause, and invented the present invention. More specifically, when UL data is repeatedly transmitted by UL grant-free based on the number of times of repeated transmission, whether or not to count the number of times of repeated transmission is controlled based on a radio resource type allocated to the repeated transmission.

Consequently, it is possible to prevent a difference between counting (recognition) of the number of times of repeated transmission counted by the user terminal and the number of times of repeated transmission recognized (understood) by the radio base station (gNB). Consequently, repeated transmission of UL grant-free transmission is appropriately performed, so that it is possible to improve performance and reliability of radio communication.

In addition, the above radio resource types may have the same meaning as that of the reason to skip repeated transmission. Specific radio resource types will be described below.

An embodiment according to the present invention will be described in detail below with reference to the drawings. A radio communication method according to each embodiment may be each applied alone or may be applied in combination.

In addition, in the following embodiment, any signal and channel may be read by being assigned a prefix "NR-" that indicates usage for NR.

Furthermore, parameters (that may be referred to as radio parameters or configuration information) used for UL grant-free transmission may be referred to as UL grant-free transmission parameters. In addition, the "parameters" may mean a "parameter set" that indicates one or a plurality of parameter sets.

### (Radio Communication Method)

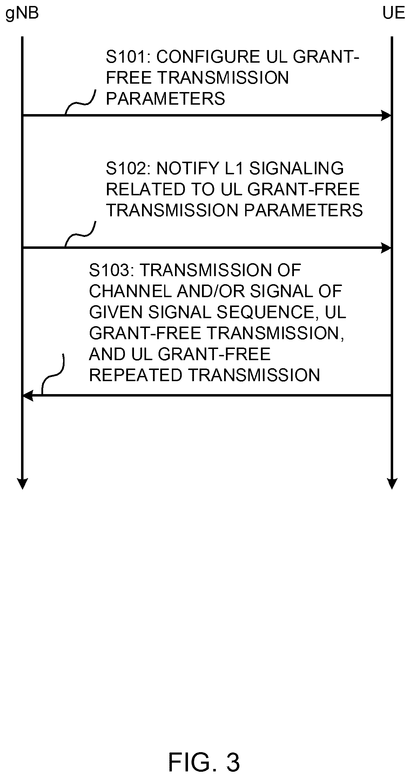

A UL grant-free transmission flow according to one embodiment of the present invention will be described with reference to Fig. 3. Fig. 3 is a diagram illustrating one example of the UL grant-free transmission flow according to the one embodiment of the present invention.

First, UL grant-free transmission parameters are semi-statically configured to a UE by a gNB by a higher layer signaling (e.g., a Radio Resource Control (RRC) signaling, broadcast information (a Master Information Block (MIB) or a System Information Block (SIB)) or a Medium Access Control (MAC) signaling) (step S101).

The UE performs UL grant-free transmission based on the configuration information. In addition, step S101 may be omitted, and the UL grant-free transmission parameters may be defined by a specification.

The UL grant-free transmission parameters includes at least one of following parameters: time and/or frequency resources, a Modulation and Coding Scheme (MCS) (a Redundancy Version (RV) may be included), a reference signal parameter, the number of times of repetition (K) of UL grant-free transmission, RV cycling (changing), a power ramping related parameter, random backoff and MCS adjustment of each repetition.

In this regard, the time and/or frequency resources may be indicated by, for example, indices related to the time and/or frequency resources (e.g., Physical Resource Block (PRB) indices, cell indices, slot indices, subframe indices or symbol indices), or periodicities in time and/or frequency directions of the resources.

In addition, part of parameters (e.g., the power ramping related parameter, the RV cycling (changing) and the MCS adjustment) may be configured relative to during a given number of times of repeated transmission or may be configured relative to between repeated transmissions. For example, the power ramping may be applied to during repeated transmission, the same transmission power may be applied to during repeated transmission, and the power ramping may be applied to between the repeated transmissions.

Furthermore, a higher layer signaling for configuring the UL grant-free transmission parameters may be a UE-common signaling or may be a UE-specific signaling.

Information related to the UL grant-free transmission parameters is dynamically notified to the UE by an L1 signaling (e.g., a Physical downlink Control Channel (PDCCH)) from the gNB (step S102). The L1 signaling in step S102 may be referred to as an L1 signaling related to the UL grant-free transmission parameters.

The L1 signaling related to the UL grant-free transmission parameters may be an L1 signaling (that may be referred to as a parameter notification L1 signaling) for notifying the UL grant-free transmission parameters.

Regarding the parameters notified by the parameter notification L1 signaling, even when the parameters are configured by a higher layer signaling (that may be read as "defined by the specification" and applies likewise below), the UE controls UL grant-free transmission based on values of the parameters notified by the L1 signaling.

In this regard, the parameters notified by the L1 signaling may be parameters for overriding, updating, adjusting or modifying radio parameters configured by the higher layer signaling. In addition, an expression such as "override" is one example, and may be obviously read as words having the same meanings as these words.

The parameters notified by the parameter notification L1 signaling may a subset of the parameters configured by the higher layer signaling, or may be a set different from the parameters configured by the higher layer signaling (i.e., the parameters that are not configured by the higher layer signaling may be notified by the L1 signaling).

Furthermore, the parameters notified by the parameter notification L1 signaling are not limited to UL grant-free transmission parameters of the same cell (same carrier), and may be a signaling for overriding, adjusting or modifying UL grant-free transmission parameters of other cells (other carriers).

In addition, UL grant-free transmission parameters of which cell (carrier) are overriden, adjusted or modified may be configured to the UE in advance by a higher layer signaling, or may be indicated by a carrier indictor included in the parameter notification L1 signaling. Whether or not to include the carrier indicator in the parameter notification L1 signaling may be additionally configured by the higher layer signaling. In this case, it is possible to appropriately control a payload of the L1 signaling.

The L1 signaling related to the UL grant-free transmission parameters may be an L1 signaling (that may be referred to as an activation L1 signaling) for activating parameters (parameter set) used for UL grant-free transmission.

The activation L1 signaling is used to start activation (that may be referred to as activate or enable) of a parameter set used for UL grant-free transmission from a plurality of parameter sets configured by the higher layer signaling in step S101. In addition, an indication for activating the parameter set may be included together with a given parameter set in the activation L1 signaling.

Furthermore, the activation L1 signaling may activate the UL grant-free transmission parameters of the same cell (same carrier), or may activate UL grant-free transmission parameters of other cells (other carriers).

The L1 signaling related to the UL grant-free transmission parameters may be, for example, DCI (that includes, for example, DCI formats 1/2 and may be referred to as a DL assignment) for scheduling DL data reception, or DCI (that includes, for example, DCI formats 0/4 and may be referred to as a UL grant) for scheduling UL data transmission. Names such as the DL assignment and the UL grant in this description are used to indicate that these pieces of DCI and formats are identical or similar, and these pieces of DCI may not indicate data scheduling according to one embodiment of the present embodiment.

When one or a plurality of fields (fields defined by a DCI format) included the received DL assignment or UL grant each takes a given value, the UE may validate that the DL assignment or the UL grant is the L1 signaling related to the UL grant-free transmission parameters. In addition, a combination and values of fields used for this validation may be defined differently from combinations and values of fields for validating that the DL assignment or the UL grant is SPS activation or release (deactivation).

The UE performs UL grant-free transmission (e.g., data transmission that uses UL grant-free transmission resources) based on the L1 signaling in step S102 (step S103). In step S103, the UE may transmit UL data, and transmit a detection signal for detecting the UL grant-free transmission.

### <UL Grant-Free Repeated Transmission>

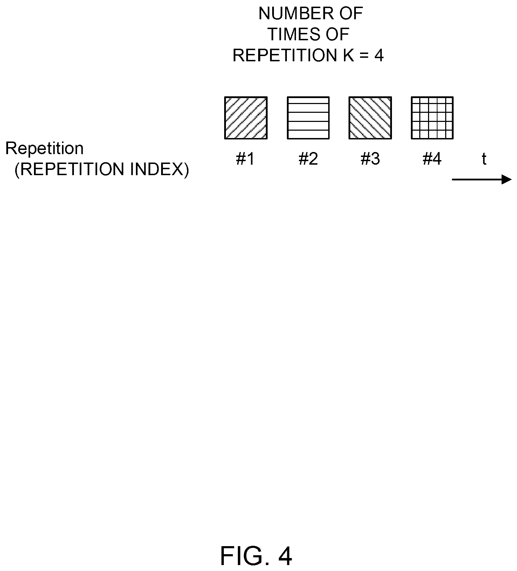

According to UL grant-free transmission in step S103, the UE performs repeated transmission based on the number of times of repetition (K) of UL grant-free transmission. In, for example, an example illustrated in Fig. 4, the number of times of repetition K is configured to 4. Thus, the same data is repeatedly transmitted according to UL grant-free transmission of Repetitions (repetition indices) #1 to #4.

UL grant-free transmission (multiple UL grant-free transmission that uses repetition) that uses repetition will be referred to as "Repetitions". This UL grant-free transmission may be referred to as "TTI Bundle" or "Aggregated data". Furthermore, one repeated transmission of the UL grant-free transmission that uses repetition will be referred to as "Repetition". This may be referred to as a "TTI" or "Each transmission".

In addition, in Fig. 4, hatchings of the Repetitions #1 to #4 differ, yet indicate different Repetitions and do not mean that different items of data are transmitted. In addition, these items of data are items of data generated based on the same TB. Each data only needs to enable reception, demodulation and decoding of the TB. For example, an RV, an MCS, a code rate, and amounts of time/frequency/space resources may differ. Furthermore, a time interval is provided (configured temporarily non-contiguously (discontinuously)) between the Repetitions #1 to #4, yet the time interval does not necessarily need to be provided (non-contiguous), and two or more Repetitions may be contiguously configured on a time axis.

Next, two cases that are supported by the UE that performs repeated transmission, and are cases where Repetition is skipped 1 or more times will be described.

### <Case 1>

When Repetition is skipped in resources specified based on the UL grant-free transmission parameters, and when Repetition (a radio resource type allocated to the Repetition) to be skipped is categorized as a Type A described below, the UE does not count the Repetition to be skipped as part (one transmission) of Repetitions.

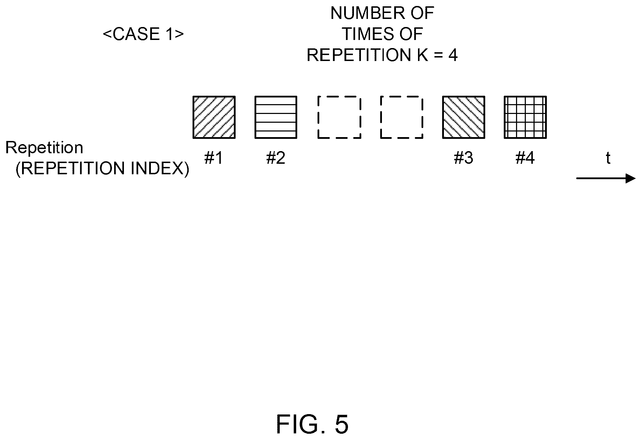

In an example illustrated in Fig. 5, after transmission of the Repetition #2, repeated transmission corresponding to two times of Repetition is skipped. In this case, when the radio resource type (a reason to skip the Repetition) allocated to the Repetition to be skipped is the Type A, skipped Repetition is not counted. Hence, as illustrated in Fig. 5, counting is resumed from the Repetition #3 after two times of Repetition are skipped.

### <Case 2>

When Repetition is skipped in resources specified based on the UL grant-free transmission parameters, and when Repetition (a radio resource type to be allocated to the Repetition) to be skipped is categorized as a Type B described below, the UE counts (continues counting) the Repetition to be skipped as part (one transmission) of the Repetitions.

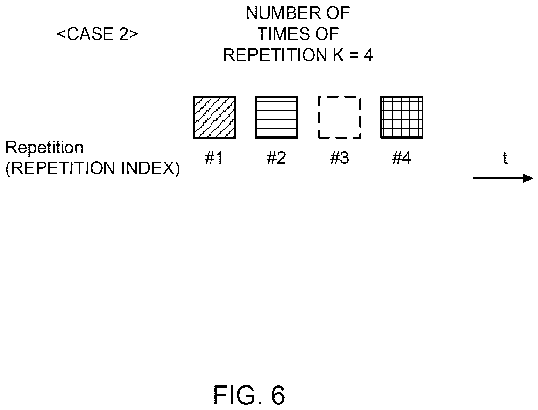

In an example illustrated in Fig. 6, after transmission of the Repetition #2, repeated transmission corresponding to one time of Repetition is skipped. In this case, when a radio resource type (the reason to skip the Repetition) allocated to the Repetition to be skipped is the Type B, the skipped Repetition is counted as part of the Repetitions. In other words, even when the Repetition is skipped, counting of the Repetition continues. Hence, as illustrated in Fig. 6, Repetition after one time of Repetition is skipped is counted as the Repetition #4.

Next, the radio resource types (the reasons to skip the Repetition) Type A and Type B will be described.

### <Type A>

The type A means a situation that a radio base station gNB has the same recognition (understanding) as that of the UE. From a viewpoint of radio resources, this means that the gNB recognizes that radio resources allocated to Repetition are used for other than Repetitions. Furthermore, from a viewpoint of the reason to skip, this means that the gNB recognizes the reason to skip the Repetition.

More specifically, the reasons include following three reasons to block the Repetition.
·Additionally configured/indicated transmission of, for example, a Sounding Reference Signal (SRS) or a Contention-Free Random Access (CFRA) occurs (causes contention or contends).
·A measurement gap is configured.
·Downlink (DL) or reserved of another signaling is indicated in part of Repetition (part of resources used by the Repetition).

In addition, according to the CFRA, the UE transmits on a PRACH a UE-specific random access preamble (dedicated preamble) allocated in advance by a network. In this case, the UE performs PRACH transmission based on the indication of the base station, so that the base station can grasp that Repetition is blocked due to the CFRA.

Furthermore, the UE supports inter-frequency measurement for performing measurement in a non-serving carrier different from a connected serving carrier. According to inter-frequency measurement, at least one of Reference Signal Received Power (RSRP) of the non-serving carrier, a Received Signal Strength Indicator (RSSI), and Reference Signal Received Quality (RSRQ) is measured.

In this regard, the RSRP is received power of a desired signal, and is measured by using, for example, a CRS. Furthermore, the RSSI is total received power including the received power of the desired signal, and an interference and noise power. The RSRQ is a ratio of the RSRP with respect to the RSSI.

The UE switches a reception frequency from the serving carrier to the non-serving carrier in the above Measurement Gap (MG), measures at least one of the RSRP, the RSSI and the RSRQ by using one of, for example, a CRS, a CSI-RS and an SS, and switches the reception frequency from the non-serving carrier to the serving carrier. In this regard, the measurement gap is a duration for performing inter-frequency measurement, and the UE stops transmission and reception in a carrier in communication, and performs measurement in a carrier of another frequency during this duration.

### <Type B>

The type B means a situation that the radio base station gNB does not have the same recognition (understanding) as that of the UE. From a viewpoint of radio resources, this means that the gNB does not recognize that radio resources allocated to Repetition are used for other than Repetitions. Furthermore, from a viewpoint of the reason to skip, this means that the gNB does not recognize the reason to skip the Repetition.

More specifically, the reasons include following three reasons to block the Repetition.
·A traffic arrival (an instant at which data is transferred from a higher layer to a physical layer) occurs in the middle of one Repetition.
·Transmission of a Contention-Based Random Access (CBRA) or a beam recovery request to be triggered in the UE occurs.
·Repetition is dropped due to power restriction.

In this regard, according to the CBRA, the UE transmits on the PRACH a preamble selected at random from a plurality of random access preambles (contention preambles) prepared in a cell. In this case, the user terminal autonomously decides transmission of the PRACH, and therefore when the transmission of the PRACH blocks Repetition, the base station cannot recognize that the Repetition has been blocked.

### <Mix of Cases 1 and 2>

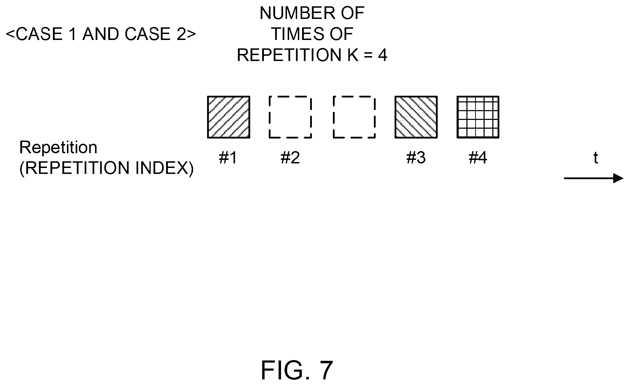

In a case where the UE supports the above case 1 and case 2, a situation that these is a mix of these cases is assumed. Fig. 7 illustrates an example where there is the mix of the cases 1 and 2.

In this example, after transmission of the Repetition #1, repeated transmission corresponding to two times of Repetition is skipped. According to the first skip, the radio resource type (the reason to skip the Repetition) of the Repetition to be skipped is categorized as the Type B. Hence, the Repetition that has been skipped first is counted as part of the Repetitions.

On the other hand, according to the second skip, the radio resource type (the reason to skip the Repetition) of the Repetition to be skipped is categorized as the Type A. Hence, the skipped Repetition is not counted. Hence, as illustrated in Fig. 7, after two times of the Repetition are skipped, counting is resumed from the Repetition #3.

According to the above-described one embodiment of the present invention, it is possible to prevent a difference between the counted (recognized) number of times of repetition counted by the user terminal and the counted number of times of repetition recognized (understood) by the radio base station (gNB). Consequently, repeated transmission is appropriately performed during UL grant-free transmission, and it is possible to improve performance and reliability of radio communication.

### <Modified Example of Repeated Transmission>

According to Repetitions indicated by the number of times of repeated transmission K, each Repetition may have a different Redundancy Version (RV). For example, RV = #0 may be transmitted during the first Repetition of the Repetitions, and the redundancy versions may be switched in order of RV = #2, #3 and #1 during the subsequent Repetitions. Repetition numbers and RV indices may be defined in advance, or may be able to be configured by, for example, a higher layer signaling. When, for example, it is preferable to synthesize packets of an identical RV, the same RV can be configured to be continuously transmitted between the Repetitions. When a hybrid ARQ gain of a different RV is preferable, the RV can be configured to be switched and transmitted. Furthermore, Resource Allocation (RA) may differ per Repetition.

For example, frequency hopping may be applied to a plurality of Repetitions. An RA size may differ between a plurality of Repetitions. Furthermore, a Modulation and Coding Scheme (MCS) may differ between a plurality of Repetitions.

Taking this modified example into account, it is considered to, for example, apply a higher MCS and smaller RA to one or more preceding (temporarily early) Repetitions, and apply a low MCS and larger RA to one or more subsequent (temporarily late) Repetitions. According to this modified example, it is possible to improve frequency use efficiency for the one or more preceding Repetitions, and enhance reliability of communication for the subsequent Repetitions.

### (Radio Communication System)

The configuration of the radio communication system according to one embodiment of the present invention will be described below. This radio communication system uses one or a combination of the radio communication method according to each of the above embodiment of the present invention to perform communication.

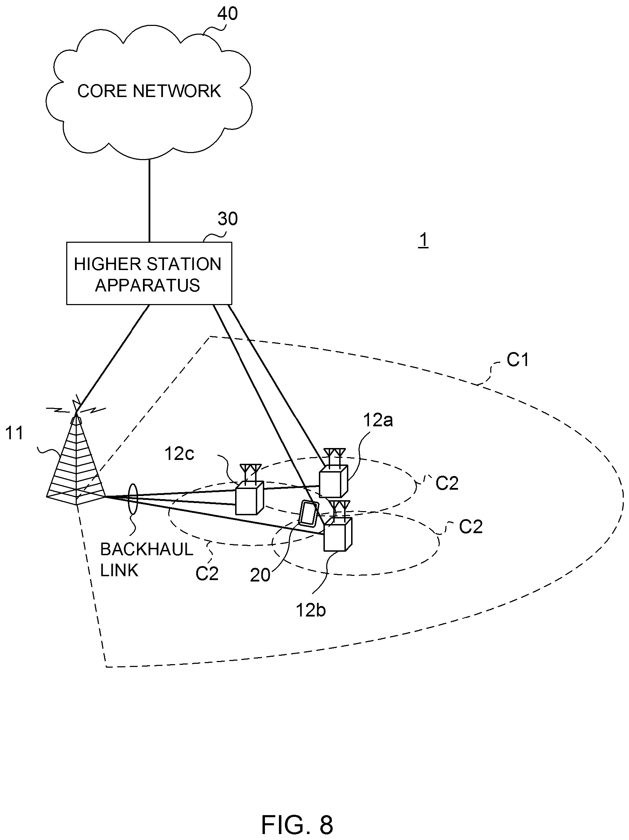

Fig. 8 is a diagram illustrating one example of a schematic configuration of the radio communication system according to the one embodiment of the present invention. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and user terminals 20 are not limited to the aspect illustrated in Fig. 8.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 may apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink, and applies Single Carrier Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and System Information Blocks (SIBs) are conveyed on the PDSCH.

Furthermore, Master Information Blocks (MIBs) are conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific Reference Signal). Furthermore, a reference signal to be conveyed is not limited to these.

### (Radio Base Station)

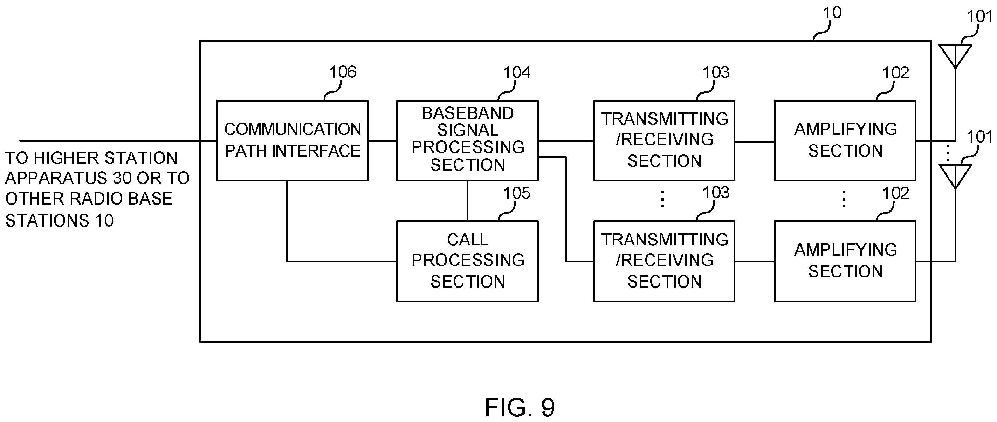

Fig. 9 is a diagram illustrating one example of an overall configuration of the radio base station according to the one embodiment of the present invention. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency range, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the channel interface 106. The call processing section 105 performs call processing (such as configuration and release) of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

Each transmission/reception section 103 receives from the user terminal 20 data transmitted according to UL grant-free transmission for transmitting UL data without a UL transmission indication (UL grant) from the radio base station 10. Furthermore, each transmission/reception section 103 receives data that has been repeatedly transmitted by UL grant-free.

Furthermore, each transmission/reception section 103 may transmit at least one of a parameter notification L1 signaling, an activation L1 signaling and a deactivation L1 signaling to the user terminal 20.

Each transmission/reception section 103 may transmit a given physical layer signaling (e.g., the parameter notification L1 signaling, the activation L1 signaling or the deactivation L1 signaling), and then receive from the user terminal 20 a transmission acknowledgement signal that has been transmitted by using a given signal and/or channel and indicates that the physical layer signaling has been received and/or is not received. For example, the transmission acknowledgement signal may be transmitted by using at least one of an MAC signaling, an SRS, a PUCCH and an SR.

Furthermore, each transmission/reception section 103 may transmit information related to UL grant-free transmission parameters or information related to transmission acknowledgement to the user terminal 20. The parameters may include a given value K for repeatedly transmitting UL data a given number of times (e.g., K) in a Transport Block (TB) unit when performing UL grant-free transmission.

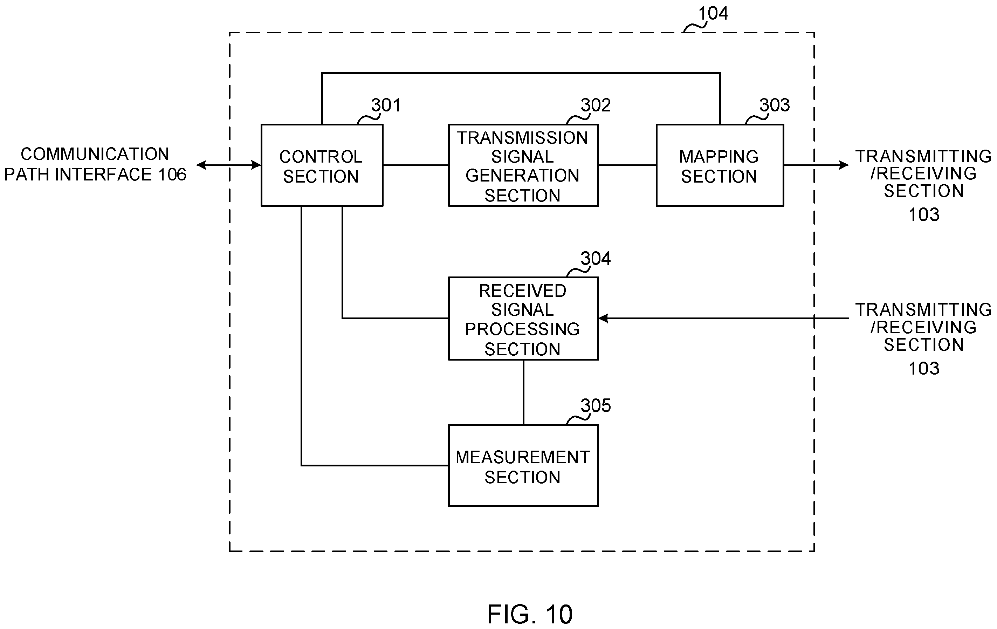

Fig. 10 is a diagram illustrating one example of a function configuration of the radio base station according to the one embodiment of the present invention. In addition, this example mainly illustrates function blocks of characteristic portions according to the present embodiment, and may assume that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present invention.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal. Furthermore, the control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

Furthermore, the control section 301 controls scheduling of an uplink data signal (e.g., a signal that is transmitted on the PUSCH), an uplink control signal (e.g., a signal that is transmitted on the PUCCH and/or the PUSCH and is, for example, transmission acknowledgement information), a random access preamble (e.g., a signal that is transmitted on the PRACH) and an uplink reference signal.

Furthermore, when UL grant-free transmission is performed, the control section 301 may receive a detection signal transmitted by using the determined radio resources, and recognize the UL grant-free transmission. Furthermore, the control section 301 may perform control to receive and demodulate the UL data transmitted according to the UL grant-free transmission in response to reception of a signal for detecting the UL grant-free transmission.

Furthermore, the control section 301 may change contents of the UL grant-free transmission parameters to be transmitted to the user terminal 20. For example, the control section 301 may control the number of times of repetition K based on communication environment.

The transmission signal generating section 302 generates a downlink signal (such as a downlink control signal, a downlink data signal or a downlink reference signal) based on an indication from the control section 301, and outputs the downlink signal to the mapping section 303. The transmission signal generating section 302 can be composed of a signal generator, a signal generating circuit or a signal generating apparatus described based on the common knowledge in the technical field according to the present invention.

The transmission signal generating section 302 generates, for example, a DL assignment for notifying downlink data allocation information, and/or a UL grant for notifying uplink data allocation information based on the indication from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on given radio resources based on the indication from the control section 301, and outputs the downlink signal to each transmission/reception section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present invention.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present invention.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### (User Terminal)

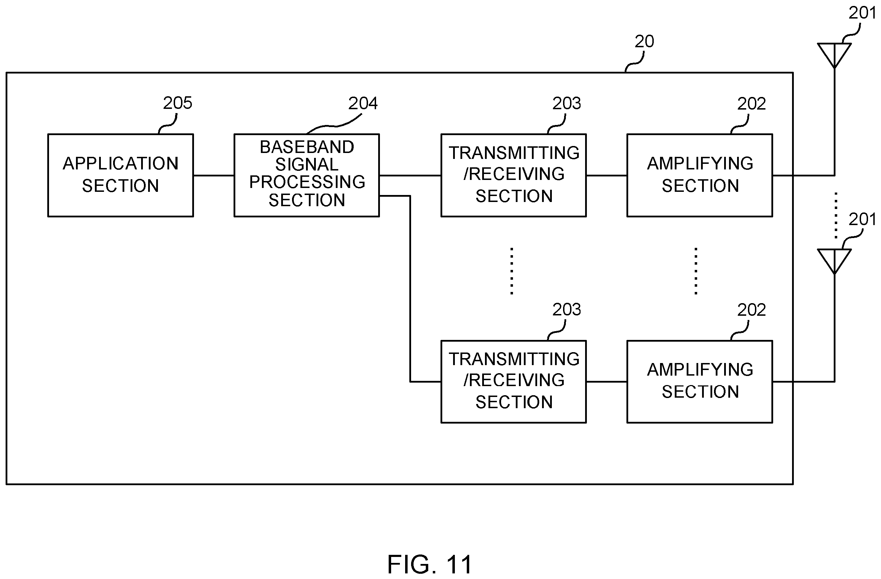

Fig. 11 is a diagram illustrating one example of an overall configuration of the user terminal according to the one embodiment of the present invention. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present invention. In this regard, the transmission/reception sections 203 may be composed as an integrated transmission/reception section or may be composed of transmission sections and reception sections.

The baseband signal processing section 204 performs FFT processing, error correcting decoding, and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmission/reception section 203. Each transmission/reception section 203 converts the baseband signal output from the baseband signal processing section 204 into a radio frequency range, and transmits a radio frequency signal. The radio frequency signal subjected to the frequency conversion by each transmission/reception section 203 is amplified by each amplifying section 202, and is transmitted from each transmission/reception antenna 201.

Each transmission/reception section 203 performs UL grant-free transmission for transmitting UL data without a UL transmission indication (UL grant) from the radio base station 10. Furthermore, each transmission/reception section 203 receives the information related to the UL grant-free transmission parameters and the transmission acknowledgement from the radio base station 10.

Each transmission/reception section 203 performs UL grant-free repeated transmission according to the number of times of repetition K, radio resources (time and/or frequency resources) and a modulation and coding scheme included in the UL grant-free transmission parameters.

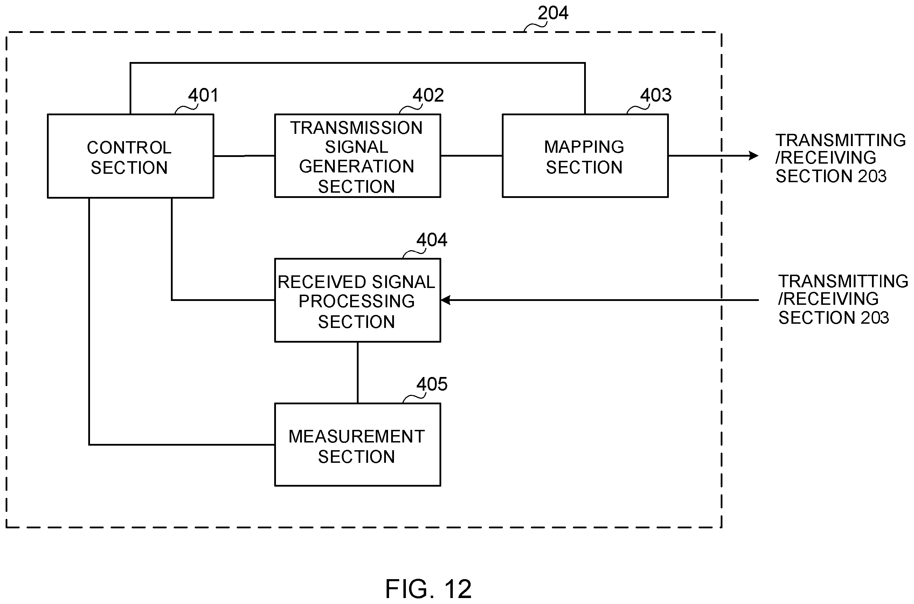

Fig. 12 is a diagram illustrating one example of a function configuration of the user terminal according to the one embodiment of the present invention. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present invention.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

When UL grant-free repeated transmission is performed, the control section 401 controls repetition of the UL grant-free transmission based on the number of times of repetition. When, for example, the repetition is skipped, whether or not to count the number of times of repetition is controlled based on a type of radio resources allocated (used) to the repetition to be skipped.

For example, the categorization such as the above Type A and Type B is applicable to the type of the radio resources. More specifically, when the type of the radio resources allocated to the repetition to be skipped is the Type A, the control section 401 does not count the skipped repetition as the number of times of repetition K. When the type of the radio resources is the Type B, the control section 401 counts the skipped repetition.

The transmission signal generating section 402 generates an uplink signal (such as an uplink control signal, an uplink data signal or an uplink reference signal) based on an indication from the control section 401, and outputs the uplink signal to the mapping section 403. The transmission signal generating section 402 can be composed of a signal generator, a signal generating circuit or a signal generating apparatus described based on the common knowledge in the technical field according to the present invention.

The transmission signal generating section 402 generates an uplink control signal related to transmission acknowledgement information and Channel State Information (CSI) based on, for example, the indication from the control section 401. Furthermore, the transmission signal generating section 402 generates an uplink data signal based on the indication from the control section 401. When, for example, the downlink control signal notified from the radio base station 10 includes a UL grant, the transmission signal generating section 402 is indicated by the control section 401 to generate an uplink data signal.

The mapping section 403 maps the uplink signal generated by the transmission signal generating section 402, on radio resources based on the indication from the control section 401, and outputs the uplink signal to each transmission/reception section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the received signal input from each transmission/reception section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present invention.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

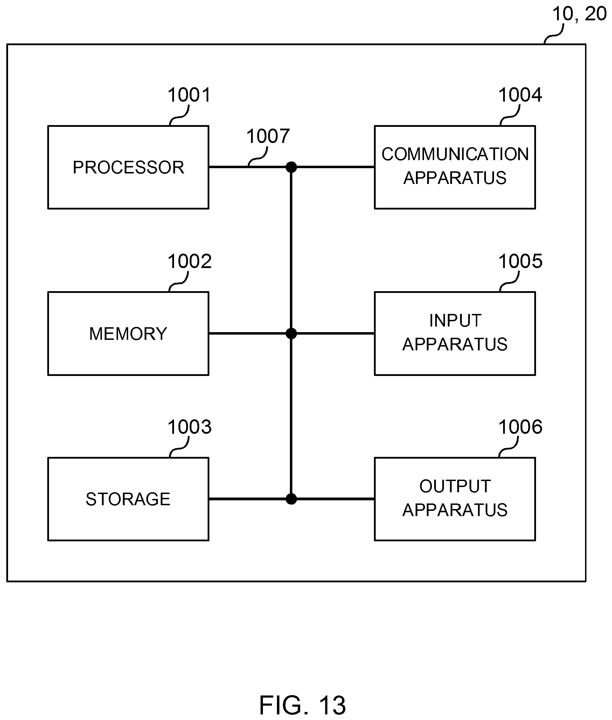

For example, the radio base station and the user terminal according to the one embodiment of the present invention may function as computers that perform processing of the radio communication method according to the present invention. Fig. 13 is a diagram illustrating one example of the hardware configurations of the radio base station and the user terminal according to the one embodiment of the present invention. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 13 or may be configured without including part of the apparatuses.

For example, Fig. 13 illustrates the only one processor 1001. However, there may be a plurality of processors. Furthermore, processing may be executed by 1 processor or may be executed by 1 or more processors concurrently, successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present invention.

The storage 1003 is a computer-readable recording medium and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using a bus that differs per apparatus.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time-domain. Each of one or a plurality of durations (frames) that composes a radio frame may be referred to as a subframe. Furthermore, the subframe may include one or a plurality of slots in the time-domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier Frequency Division Multiple Access (SC-FDMA) symbols) in the time-domain. Furthermore, the slot may be a time unit based on the numerologies. Furthermore, the slot may include a plurality of mini slots. Each mini slot may include one or a plurality of symbols in the time-domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

Resource Blocks (RBs) are resource allocation units of the time-domain and the frequency-domain, and may include one or a plurality of contiguous subcarriers in the frequency-domain. Furthermore, the RB may include one or a plurality of symbols in the time-domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be indicated by a given index.

Names used for parameters in this description are by no means restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are by no means restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (Master Information Blocks (MIBs) and System Information Blocks (SIBs)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not notifying this given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description can be compatibly used.

In this description, the terms "Base Station (BS)", "radio base station", "eNB", "gNB", "cell", "sector", "cell group", "carrier" and "component carrier" can be compatibly used. The base station will be also referred to as a term such as a fixed station, a NodeB, an eNodeB (eNB), an access point, a transmission point, a reception point, a transmission/reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

The base station and/or the mobile station may be referred to as a transmission apparatus or a reception apparatus.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically, logically or by a combination of physical and logical connections. For example, "connection" may be read as "access".

It can be understood that, when connected in this description, the two elements are "connected" or "coupled" with each other by using 1 or more electric wires, cables and/or printed electrical connection, and by using electromagnetic energy having wavelengths in radio frequency-domains, microwave domains and/or (both of visible and invisible) light domains in some non-restrictive and incomprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an XOR.

The present invention has been described in detail above. However, it is obvious for a person skilled in the art that the present invention is not limited to the embodiment described in this description. The present invention can be carried out as modified and changed aspects without departing from and the scope of the present invention defined based on the recitation of the claims.

## Claims

1. A terminal (20) comprising:
a transmission section (203) configured to transmit, to a base station, a physical uplink shared channel, PUSCH, without an uplink, UL, grant, based on configuration information indicating resources and including a number of times of repetition, wherein the configuration information is configured by radio resource control, RRC, signaling received from the base station (10); and
a control section (401) configured to perform repeated transmission of the PUSCH based on the number of times of repetition,
wherein the control section (401) is configured to control omission of at least one transmission in the repeated transmission based on the configuration information, and
wherein the control section (401) is configured to control, when a part of the resources used for the repeated transmission is indicated as a downlink, DL, by the configuration information, omission of the at least one transmission in the repeated transmission.

2. The terminal (20) according to claim 1, wherein the configuration information comprises an indication of a slot configuration.

3. A radio communication method for a terminal (20) comprising:
transmitting, to a base station, a physical uplink shared channel, PUSCH, without an uplink, UL, grant, based on configuration information indicating resources and including a number of times of repetition, wherein the configuration information is configured by radio resource control, RRC, signaling received from a base station (10);
performing repeated transmission of the PUSCH based on the number of times of repetition; and
controlling omission of at least one transmission in the repeated transmission based on the configuration information,
wherein the controlling step controls, when a part of the resources used for the repeated transmission is indicated as a downlink, DL, by the configuration information, omission of the at least one transmission in the repeated transmission.

4. A base station (10) comprising:
a transmission section (103) configured to transmit radio resource control, RRC, signaling to a terminal (20), wherein the RRC signaling configures configuration information, wherein the configuration information indicates resources and includes a number of times of repetition; and
a reception section (103) configured to receive a repeated transmission of a physical uplink shared channel, PUSCH, without an uplink, UL, grant transmitted based on the number of times of repetition, and
a control section (301) configured to indicate, based on the configuration information, omission of at least one transmission in the repeated transmission, and
wherein the control section (301) is configured to indicate, when a part of the resources used for the repeated transmission is indicated as a downlink, DL, by the configuration information, omission of the at least one transmission in the repeated transmission.

5. A system comprising a terminal (20) according to claim 1 and a base station (10) according to claim 4.

## Patentansprüche

1. Endgerät (20), umfassend:
einen Sendeabschnitt (203), der konfiguriert ist zum Übertragen, an eine Basisstation, eines gemeinsam genutzten physikalischen Uplink-Kanals, PUSCH, ohne einen Uplink-, UL-, Grant, basierend auf Konfigurationsinformationen, die Ressourcen anzeigen und eine Anzahl von Malen von Wiederholungen einschließen, wobei die Konfigurationsinformationen durch eine Funkressourcensteuerungs-, RRC-, Signalisierung, konfiguriert ist, die von der Basisstation (10) empfangen wird; und
einen Steuerabschnitt (401), der konfiguriert ist, um eine wiederholte Übertragung des PUSCH basierend auf der Anzahl von Malen von Wiederholungen durchzuführen,
wobei der Steuerabschnitt (401) konfiguriert ist, um basierend auf den Konfigurationsinformationen das Weglassen von mindestens einer Übertragung in der wiederholten Übertragung zu steuern, und
wobei der Steuerabschnitt (401) konfiguriert ist, um, wenn ein Teil der für die wiederholte Übertragung verwendeten Ressourcen durch die Konfigurationsinformationen als Downlink, DL, angezeigt ist, das Weglassen der mindestens einen Übertragung in der wiederholten Übertragung zu steuern.

2. Endgerät (20) nach Anspruch 1, wobei die Konfigurationsinformationen eine Anzeige einer Slotkonfiguration umfassen.

3. Funkkommunikationsverfahren für ein Endgerät (20), umfassend:
Übertragen, an eine Basisstation,
eines gemeinsam genutzten physikalischen Uplink-Kanals, PUSCH, ohne einen Uplink-, UL-, Grant, basierend auf Konfigurationsinformationen, die Ressourcen anzeigen und eine Anzahl von Malen von Wiederholungen einschließen, wobei die Konfigurationsinformationen durch Funkressourcensteuerungs-, RRC-, Signalisierung konfiguriert sind, die von einer Basisstation (10) empfangen werden;
Durchführen einer wiederholten Übertragung des PUSCH basierend auf der Anzahl von Malen von Wiederholungen; und
Steuern des Weglassens von mindestens einer Übertragung in der wiederholten Übertragung basierend auf den Konfigurationsinformationen,
wobei der Steuerschritt, wenn ein Teil der für die wiederholte Übertragung verwendeten Ressourcen durch die Konfigurationsinformation als Downlink, DL, angezeigt ist, das Weglassen der mindestens einen Übertragung in der wiederholten Übertragung steuert.

4. Basisstation (10), umfassend:
einen Sendeabschnitt (103), der konfiguriert ist, um eine Funkressourcensteuerungs-, RRC-, Signalisierung, an ein Endgerät (20) zu übertragen, wobei die RRC-Signalisierung Konfigurationsinformationen konfiguriert, wobei die Konfigurationsinformationen Ressourcen anzeigen und eine Anzahl von Malen Wiederholungen einschließen; und
einen Empfangsabschnitt (103), der konfiguriert ist, um eine wiederholte Übertragung eines gemeinsam genutzten physikalischen Uplink-Kanals, PUSCH, zu empfangen, die ohne einen Uplink-, UL-, Grant basierend auf der Anzahl von Malen von Wiederholungen übertragen wird, und
einen Steuerabschnitt (301), der konfiguriert ist, um basierend auf den Konfigurationsinformationen das Weglassen von mindestens einer Übertragung in der wiederholten Übertragung anzuzeigen, und
wobei der Steuerabschnitt (301) konfiguriert ist, um, wenn ein Teil der für die wiederholte Übertragung verwendeten Ressourcen durch die Konfigurationsinformationen als Downlink, DL, angezeigt ist, das Weglassen der mindestens einen Übertragung in der wiederholten Übertragung anzuzeigen.

5. System, umfassend ein Endgerät (20) nach Anspruch 1 und eine Basisstation (10) nach Anspruch 4.

## Revendications

1. Terminal (20) comprenant :
une section de transmission (203) configurée pour transmettre, à une station de base,
un canal partagé de liaison montante physique, PUSCH, sans octroi de liaison montante, UL, sur la base d'informations de configuration indiquant des ressources et incluant un nombre de répétitions, dans lequel les informations de configuration sont configurées par une signalisation de commande de ressource radio, RRC, reçue de la station de base (10) ; et
une section de commande (401) configurée pour mettre en œuvre une transmission répétée du PUSCH sur la base du nombre de répétitions,
dans lequel la section de commande (401) est configurée pour commander une omission d'au moins une transmission dans la transmission répétée sur la base des informations de configuration, et
dans lequel la section de commande (401) est configurée pour commander, lorsqu'une partie des ressources utilisées pour la transmission répétée est indiquée comme une liaison descendante, DL, par les informations de configuration, une omission de l'au moins une transmission dans la transmission répétée.

2. Terminal (20) selon la revendication 1, dans lequel les informations de configuration comprennent une indication d'une configuration de créneau.

3. Procédé de communication radio pour un terminal (20) comprenant :
transmettre, à une station de base,
un canal partagé de liaison montante physique, PUSCH, sans octroi de liaison montante, UL, sur la base d'informations de configuration indiquant des ressources et incluant un nombre de répétitions, dans lequel les informations de configuration sont configurées par une signalisation de commande de ressource radio, RRC, reçue d'une station de base (10) ;
mettre en œuvre une transmission répétée du PUSCH sur la base du nombre de répétitions ; et
commander une omission d'au moins une transmission dans la transmission répétée sur la base des informations de configuration,
dans lequel l'étape de commande, lorsqu'une partie des ressources utilisées pour la transmission répétée est indiquée comme une liaison descendante, DL, par les informations de configuration, commande l'omission de l'au moins une transmission dans la transmission répétée.

4. Station de base (10) comprenant :
une section de transmission (103) configurée pour transmettre une signalisation de commande de ressource radio, RRC, à un terminal (20), dans laquelle la signalisation RRC configure des informations de configuration, dans laquelle les informations de configuration indiquent des ressources et incluent un nombre de répétitions ; et
une section de réception (103) configurée pour recevoir une transmission répétée d'un canal partagé de liaison montante physique, PUSCH, sans octroi de liaison montante, UL, transmis sur la base du nombre de répétitions, et
une section de commande (301) configurée pour indiquer, sur la base des informations de configuration, une omission d'au moins une transmission dans la transmission répétée, et
dans laquelle la section de commande (301) est configurée pour indiquer, lorsqu'une partie des ressources utilisées pour la transmission répétée est indiquée comme une liaison descendante, DL, par les informations de configuration, une omission de l'au moins une transmission dans la transmission répétée.

5. Système comprenant un terminal (20) selon la revendication 1 et une station de base (10) selon la revendication 4.
